(19) Europäisches Patentamt
European Patent Office
Office européen des brevets

(11) **EP 4 769 884 A1**

(12) **EUROPEAN PATENT APPLICATION**
published in accordance with Art. 153(4) EPC

(43) Date of publication:
**01.07.2026 Bulletin 2026/27**

(21) Application number: **25845190.5**

(22) Date of filing: **07.07.2025**

(51) International Patent Classification (IPC):
**H02J 7/00** (2026.01)   **H01M 10/44** (2006.01)
**H01M 10/48** (2006.01)

(52) Cooperative Patent Classification (CPC):
**H01M 10/44; H01M 10/48; H02J 7/00;** Y02E 60/10

(86) International application number:
**PCT/KR2025/009755**

(87) International publication number:
**WO 2026/023926 (29.01.2026 Gazette 2026/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.07.2024 KR 20240097678**
**04.07.2025 KR 20250089967**

(71) Applicant: **LG Energy Solution, Ltd.**
**Seoul 07335 (KR)**

(72) Inventors:
• **LEE, Jong-Min**
**Daejeon 34122 (KR)**
• **KWAK, Won-Suk**
**Daejeon 34122 (KR)**
• **KIM, Soo-Youl**
**Daejeon 34122 (KR)**
• **CHANG, Hyuk-Kyun**
**Daejeon 34122 (KR)**

(74) Representative: **Plasseraud IP**
**104 Rue de Richelieu**
**CS92104**
**75080 Paris Cedex 02 (FR)**

(54) **BATTERY MANAGEMENT SYSTEM AND BATTERY MANAGEMENT METHOD**

(57)   A battery management system and a battery management method are provided. The battery management system according to the present disclosure includes a sensing unit configured to generate state data of each of a plurality of cell groups included in a battery assembly; a discharging unit configured to individually open and close a plurality of discharge paths provided to the plurality of cell groups; and a control unit configured to perform a diagnostic procedure to identify whether each of the plurality of cell groups has high temperature abnormality or low temperature abnormality based on the state data. The control unit determines at least one cell group of the plurality of cell groups as a discharge target based on a result of the diagnostic procedure, and controls the discharging unit so that at least one discharge path provided to the discharge target is conducted.

FIG. 1

**Description**

TECHNICAL FIELD

The present disclosure relates to technology for individual temperature management of a plurality of cell groups included in a battery assembly.

This application is based on and claims priority from Korean Patent Application No. 10-2024-0097678 filed on July 24, 2024 and Korean Patent Application No. 10-2025-0089967 filed on July 4, 2025 with the Korean Intellectual Property Office, the disclosures of which are incorporated herein in its entirety by reference.

BACKGROUND

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be repeatedly charged and discharged.

Batteries on the market now include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages that recharging can be done whenever it is convenient, the self-discharge rate is very low and the energy density is high.

A battery assembly for a battery system requiring large capacity and high voltage (for example, an electric vehicle or an energy storage system) includes a few to a few hundred cell groups connected either in series or in parallel, or both.

A structure in which the cell groups are arranged as closely as possible within the limited space of the battery system is beneficial for high energy density. However, when high temperature abnormality such as overheating or thermal runaway occurs in some of the cell groups, the rapid spread of high temperature abnormality to adjacent other cell group, so-called 'thermal propagation' may occur. To slow down or stop the thermal propagation, it is general to place an overheating prevention member between adjacent cell groups. Because the overheating prevention member has high fire resistance, when a small number of cell groups has high temperature abnormality, the overheating prevention member is effective in slowing down or stopping the thermal propagation. However, when a large number of cell groups has high temperature abnormality at the same time or high temperature abnormality in a small number of cell groups is very serious, the overheating prevention member may be insufficient to protect the battery assembly from thermal propagation hazards.

In addition, battery cells that form the cell group have a remarkable decline in charge/discharge performance when the temperature of the battery cells is lower than an optimum temperature, and when battery cells in very low temperature conditions are forced to be charged and discharged, their inner parts may be severely damaged. In general, before charge and discharge cycles, the battery cells in low temperature conditions are heated to increase their temperature to a normal range of temperatures by using a temperature-raising circuit equipped in a battery management system, thereby mitigating low temperature abnormality-induced hazards.

DISCLOSURE

Technical Problem

The present disclosure is directed to providing a battery management system and a battery management method for reducing high temperature- or low temperature-induced hazards in a battery assembly by forced discharging to consume energy of at least one cell group.

These and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

Technical Solution

A battery management system according to an aspect of the present disclosure includes a sensing unit configured to generate state data of each of a plurality of cell groups included in a battery assembly; a discharging unit configured to individually open and close a plurality of discharge paths provided to the plurality of cell groups; and a control unit configured to perform a diagnostic procedure to identify whether each of the plurality of cell groups has high temperature abnormality or low temperature abnormality based on the state data. The control unit is configured to determine at least one cell group of the plurality of cell groups as a discharge target according to a result of the diagnostic procedure, and control the discharging unit so that at least one discharge path provided to the discharge target is conducted.

The control unit may be configured to determine the discharge target using a selection map pre-stored to prevent thermal propagation of the battery assembly when a predetermined number or more of cell groups of the plurality of cell groups are identified as having the high temperature abnormality.

The control unit may be configured to determine the discharge target using a selection map pre-stored to prevent performance degradation of the battery assembly when a predetermined number or more of cell groups of the plurality of cell groups are identified as having the low temperature abnormality.

When two discharge paths are provided to the discharge target, the control unit may be configured to determine at least one discharge path to be conducted among the two discharge paths based on the state data of each cell group identified as having the low temperature abnormality.

The control unit may be configured to determine a discharge intensity for the discharge target based on the state data of each cell group identified as having the low temperature abnormality.

The discharging unit may include a plurality of first discharge circuits respectively connected in parallel to the plurality of cell groups. Each of the first discharge circuits may include a first switch and a first discharge load connected in series.

The discharging unit may further include a plurality of second discharge circuits respectively connected in parallel to the plurality of cell group. Each of the second discharge circuits may include a second switch and a second discharge load connected in series.

The second discharge load may be positioned closer to the cell group than the first discharge load.

The control unit may be configured to turn on at least the first switch among the first switch and the second switch connected to the discharge target when the cell group identified as having the high temperature abnormality is set as the discharge target.

The control unit may be configured to turn on at least the second switch among the first switch and the second switch connected to the discharge target when the cell group identified as having the low temperature abnormality is set as the discharge target.

A battery system according to another aspect of the present disclosure includes the battery management system.

A battery management method according to still another aspect of the present disclosure includes performing a diagnostic procedure to identify whether each of a plurality of cell groups included in a battery assembly has high temperature abnormality or low temperature abnormality based on state data of each of the plurality of cell groups; determining at least one cell group of the plurality of cell groups as a discharge target according to a result of the diagnostic procedure; and controlling a discharging unit so that at least one discharge path provided to the discharge target is conducted.

When a predetermined number or more of cell groups of the plurality of cell groups are identified as having the high temperature abnormality, the determining of the discharge target may include determining the discharge target using a selection map pre-stored to prevent thermal propagation hazards of the battery assembly.

When a predetermined number or more of cell groups of the plurality of cell groups are identified as having the low temperature abnormality, the determining of the discharge target may include determining the discharge target using a selection map pre-stored to prevent performance degradation of the battery assembly.

A computer-readable medium according to yet another aspect of the present disclosure has recorded thereon a program for causing a computer to perform the battery management method.

Advantageous Effects

According to at least one of the embodiments of the present disclosure, in cases where there are high temperature- or low temperature-induced potential hazards in the battery assembly, at least one of high or low temperature abnormality-induced hazards may be reduced by forced discharging to consume energy of at least one cell group.

Additionally, according to at least one of the embodiments of the present disclosure, it may be possible to effectively stop the spread of thermal propagation hazards by forced discharging of at least one normal cell group adjacent to abnormal cell group having high temperature abnormality.

Furthermore, according to at least one of the embodiments of the present disclosure, it may be possible to mitigate performance degradation hazards quickly and preventing an increase in SOC deviation between adjacent cell groups by forced discharging of at least one normal cell group adjacent to abnormal cell group having low temperature abnormality.

The effects of the present disclosure are not limited to the aforementioned effects, and these and other effects will be clearly understood by those skilled in the art from the description of the claims.

BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.

FIG. 1 is a diagram schematically showing the architecture of a battery system according to an embodiment of the present disclosure.

FIG. 2 is a diagram referenced in describing an example of a connection relationship between a cell group, a sensing unit and a discharging unit shown in FIG. 1.

FIG. 3 is a diagram referenced in describing another example of a connection relationship between a cell group, a sensing unit and a discharging unit shown in FIG. 1.

FIG. 4 is a flowchart referenced in briefly describing a battery management method according to another embodiment of the present disclosure.

FIG. 5 is a flowchart referenced in briefly describing an example of a set of routines included in step S440 of FIG. 4.

FIGS. 6 to 9 are diagrams referenced in describing a first selection map used to perform a first safety operation.

FIG. 10 is a flowchart referenced in briefly describing an example of a set of routines included in step S442 of FIG. 4.

FIGS. 11 to 14 are diagrams referenced in describing a second selection map used to perform a second safety operation.

BEST MODE

Hereinafter, the exemplary embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspects of the present disclosure but not intended to be limiting, so it should be understood that a variety of other equivalents and modifications could be made thereto at the time the application was filed.

The terms including the ordinal numbers such as "first", "second" and the like, are used to distinguish one element from another among various elements, but not intended to limit the elements by the terms.

Unless the context clearly indicates otherwise, the terms "comprise" and "include" when used in this specification, specify the presence of the stated elements, but do not preclude the presence or addition of one or more other elements. Additionally, the term "unit" as used herein refers to a processing unit of at least one function or operation, and may be implemented by hardware and software either alone or in combination.

In addition, throughout this specification, it will be further understood that when an element is referred to as being "connected to" another element, it can be directly connected to the other element or intervening elements may be present.

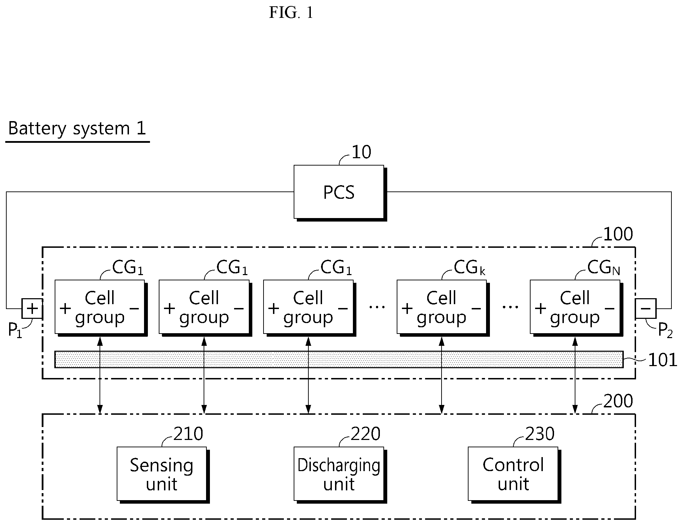

FIG. 1 is a diagram schematically showing the architecture of a battery system according to an embodiment of the present disclosure.

Referring to FIG. 1, the battery system 1 includes a battery assembly 100 and a battery management system 200. The battery system 1 may further include a power conversion system 10.

The battery assembly 100 includes a plurality of cell groups $CG_1 \sim CG_N$ (N is a natural number of 2 or greater), a first power terminal $P_1$ and a second power terminal $P_2$.

N is a natural number of 2 or greater. In this specification, in the description that is shared between the plurality of cell groups $CG_1 \sim CG_N$, the symbol 'CG' or '$CG_k$' is affixed to the cell group. k is a natural number that is equal to or smaller than N. The battery assembly 100 may be referred to as 'battery pack' or 'battery rack' depending on the application of the battery system 1, and the cell group CG may be referred to as 'battery module'.

The plurality of cell groups $CG_1 \sim CG_N$ may be connected between the first power terminal $P_1$ and the second power terminal $P_2$ either in series or in parallel or both. The cell group CG includes at least one battery cell. When the cell group CG includes a plurality of battery cells, the plurality of battery cells may be connected either in series or in parallel, or both. In this specification, the battery cell refers to a basic unit of an electricity storage device capable of charging and discharging on its own, and is not limited to a particular one and may include, for example, any rechargeable battery cell such as a lithium-ion cell.

The battery assembly 100 may further include an overheating prevention member 101. The overheating prevention member 101 may be provided to cover at least a part of each of the plurality of cell groups $CG_1$~$CG_N$. The overheating prevention member 101 may be a physical component used to block direct heat transfer between adjacent cell groups, thereby preventing the aggravation of thermal abnormality in any one cell group or its propagation, causing thermal abnormality in another cell group.

The term 'thermal abnormality' may refer to either high temperature-induced abnormality or low temperature-induced abnormality, or both.

The battery management system 200 includes a sensing unit 210, a discharging unit 220 and a control unit 230.

The sensing unit 210 generates state data of each of the plurality of cell groups $CG_1$~$CG_N$ of the battery assembly 100. Specifically, the sensing unit 210 may periodically or aperiodically measure at least one state parameter of each of the plurality of cell groups $CG_1$~$CG_N$, and the state data indicating each of the measured state parameters may be collected by the control unit 230. The state parameter is not limited to a particular type and may include any type of state parameter that directly or indirectly indicates thermal abnormality of the cell group such as, for example, temperature, voltage and/or an amount of shock.

The discharging unit 220 provides one or more discharge paths for each of the plurality of cell groups $CG_1$~$CG_N$. The discharging unit 220 is connected to the plurality of cell groups $CG_1$~$CG_N$ to individually open and close the plurality of discharge paths provided to the plurality of cell groups $CG_1$~$CG_N$. The discharging unit 220 performs an energy consumption operation for each of the plurality of cell groups $CG_1$~$CG_N$ through the plurality of discharge paths in response to a control signal from the control unit 230. The discharging unit 220 may be used to prevent at least one of thermal propagation hazard or performance degradation hazard of the battery assembly 100.

The control unit 230 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, or electrical units for performing other functions.

The control unit 230 is operably coupled to each of the sensing unit 210 and the discharging unit 220. In this instance, operably coupled refers to connection to enable signal transmission and reception in one or two directions.

The control unit 230 may have a memory device. The memory device may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory device may store data and a program required for the operation by the control unit 230. The memory device may store data indicating the result of the operation by the control unit 230.

The power conversion system 10 is electrically connected between the battery assembly 100 and an electrical system (not shown) and/or between the battery assembly 100 and a system load (not shown). The power conversion system 10 may take responsibility for bidirectional power exchange between the battery assembly 100 and the electrical system by using a DC-AC inverter and/or a DC-DC converter equipped in the power conversion system 10. That is, while in a battery charging mode, the power conversion system 10 may convert AC power supplied from the electrical system to DC power and supply it to the battery assembly 100. While in a battery discharging mode, the power conversion system 10 may convert DC power fed by the discharge of the battery assembly 100 to AC power and supply it to the electrical system and/or the system load.

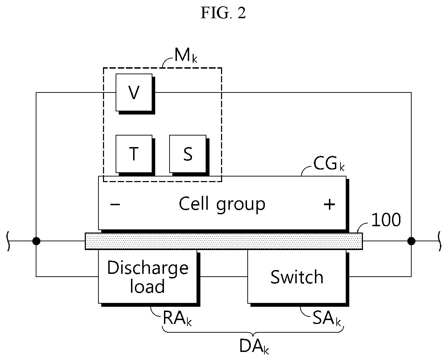

FIG. 2 is a diagram referenced in describing an example of the connection relationship between the cell group, the sensing unit and the discharging unit shown in FIG. 1. For convenience of description, FIG. 2 shows only one cell group $CG_k$ of the plurality of cell groups $CG_1$~$CG_N$ included in the battery assembly 100.

The sensing unit 210 includes a plurality of battery monitoring circuits $M_1$~$M_N$ respectively provided to the plurality of cell groups $CG_1$~$CG_N$, and FIG. 2 shows an exemplary battery monitoring circuit $M_k$ provided to the cell group $CG_k$.

The battery monitoring circuit $M_k$ may include at least one of a temperature sensor T, a voltage sensor V or a shock sensor S.

The temperature sensor T may be attached to the outer surface of the cell group $CG_k$ or installed at a predetermined location apart from the cell group $CG_k$, and measure the temperature of the cell group $CG_k$. The voltage sensor V is connected in parallel to the cell group $CG_k$ through a first terminal (+) and a second terminal (-) of the cell group $CG_k$ to measure the voltage of the cell group $CG_k$. The shock sensor S is attached to the outer surface of the cell group $CG_k$ or installed at a predetermined location apart from the cell group $CG_k$, and measures the amount of shock applied to the cell group $CG_k$. The battery monitoring circuit $M_k$ may provide the control unit 230 with sensing data indicating the measurement value of at least one of the temperature, the voltage or the amount of shock of the cell group $CG_k$.

The control unit 230 may perform a diagnostic procedure for each of the cell groups $CG_1 \sim CG_N$ based on the state data. The diagnostic procedure may be a procedure for identifying at least one of high temperature abnormality or low temperature abnormality.

The high temperature abnormality may be a type of abnormality that directly or indirectly indicates thermal propagation hazard of the battery assembly 100. When the temperature of the cell group $CG_k$ is higher than a first threshold temperature that is preset to be equal to or higher than an upper limit of a predetermined normal temperature range, the cell group $CG_k$ may be identified as having high temperature abnormality. When a predetermined first number (for example, 1 or 2 or more) or more of cell groups of the plurality of cell groups $CG_1 \sim CG_N$ are identified as having high temperature abnormality, it may be determined that there is thermal propagation hazard of the battery assembly 100. When it is determined that there is thermal propagation hazard of the battery assembly 100, the control unit 230 is configured to perform a safety operation for the battery assembly 100. The safety operation may be an operation of controlling the discharging unit 220 to consume energy of at least one of the plurality of cell groups $CG_1 \sim CG_N$ through forced discharging (referred to as 'energy drain').

The low temperature abnormality may be a type of abnormality that directly or indirectly indicates the need to increase the temperature. As well known, when a battery cell is placed in low temperature environment, charge/discharge performance of the battery cell dramatically decreases. When the temperature of the cell group $CG_k$ is lower than a second threshold temperature that is preset to be equal to or lower than a lower limit of the predetermined normal temperature range, the cell group $CG_k$ may be identified as having low temperature abnormality. When a predetermined second number (for example, one or more) or more of cell groups of the plurality of cell groups $CG_1 \sim CG_N$ are identified as having low temperature abnormality, it may be determined that there is performance degradation hazard of the battery assembly 100.

The discharging unit 220 includes a plurality of first discharge circuits $DA_1 \sim DA_N$ respectively provided to the plurality of cell groups $CG_1 \sim CG_N$, and FIG. 2 shows an exemplary first discharge circuit $DA_k$ provided to the cell group $CG_k$.

The first discharge circuit $DA_k$ may include a first switch $SA_k$ and a first resistor $RA_k$ connected in series. One end of each of the first switch $SA_k$ and the first resistor $RA_k$ is connected to each other, the other end of the first switch $SA_k$ is connected to the first terminal (for example, the positive terminal) of the cell group $CG_k$, and the other end of the first resistor $RA_k$ is connected to the second terminal (for example, the negative terminal) of the cell group $CG_k$.

While the first switch $SA_k$ is turned off, the discharge path provided to the cell group $CG_k$ by the first discharge circuit $DA_k$ is in open state. In contrast, while the first switch $SA_k$ is turned on, the discharge path provided to the cell group $CG_k$ by the first discharge circuit $DA_k$ is in closed state, so energy stored in the cell group $CG_k$ may be consumed by the first resistor $RA_k$.

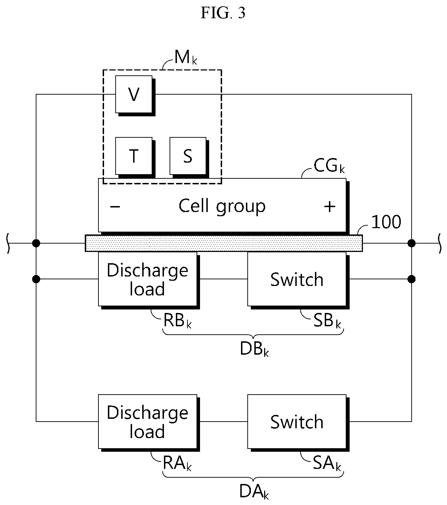

FIG. 3 is a diagram referenced in describing another example of the connection relationship between the cell group, the sensing unit and the discharging unit shown in FIG. 1.

The discharging unit 220 may further include a plurality of second discharge circuits $DB_1 \sim DB_N$ respectively connected in parallel to the plurality of cell groups $CG_1 \sim CG_N$, and FIG. 3 shows an exemplary second discharge circuit $DB_k$ provided to the cell group $CG_k$ together with the first discharge circuit $DA_k$ (same as in FIG. 2).

The second discharge circuit $DB_k$ may include a second switch $SB_k$ and a second resistor $RB_k$ connected in series.

One end of each of the second switch $SB_k$ and the second resistor $RB_k$ is connected to each other, the other end of the second switch $SB_k$ is connected to the first terminal of the cell group $CG_k$, and the other end of the second resistor $RB_k$ is connected to the second terminal of the cell group $CG_k$.

While the second switch $SB_k$ is turned off, the discharge path provided to the cell group $CG_k$ by the second discharge circuit $DB_k$ is in open state (i.e., non-conducting). In contrast, while the second switch $SB_k$ is turned on, the discharge path provided to the cell group $CG_k$ by the second discharge circuit $DB_k$ is in closed state (i.e., conducting), so energy stored in the cell group $CG_k$ may be consumed by the resistor $RB_k$.

A discharge load for each discharge circuit may include, for example, a resistor element.

As opposed to the discharging unit 220 shown in FIG. 2, two discharge circuits $DA_k$, $DB_k$ of the discharging unit 220 shown in FIG. 3 provide two discharge paths to the cell group $CG_k$. The control unit 230 may determine at least one discharge path to be conducted among the two discharge paths provided to the discharge target based on the state data of each cell group identified as having low temperature abnormality.

The first discharge load $RA_k$ and the second discharge load $RB_k$ may be stacked in layers. The first discharge load $RA_k$ and the second discharge load $RB_k$ may be spaced apart from each other, or an insulator may be positioned between them.

The second discharge load $RB_k$ may be positioned closer to the cell group $CG_k$ than the first discharge load $RA_k$. Accordingly, when the amount of heat generated per unit time of the first discharge load $RA_k$ and the amount of heat generated per unit time of the second discharge load $RB_k$ are equal, the second discharge load $RB_k$ may have a greater effect on the temperature increase of the cell group $CG_k$ than the first discharge load $RA_k$.

In a case where the second discharge load $RB_k$ is positioned closer to the cell group $CG_k$ than the first discharge

load $RA_k$, when the cell group $CG_k$ is set as the discharge target related to a first safety operation for preventing thermal propagation hazard, the control unit 230 may conduct the discharge circuit $DA_k$ among the two discharge circuits $DA_k$, $DB_k$ in preference to the discharge circuit $DB_k$. That is, at least the switch $SA_k$ among the two switches $SA_k$, $SB_k$ may be turned on.

In a case where the second discharge load $RB_k$ is positioned closer to the cell group $CG_k$ than the first discharge load $RA_k$, when the cell group $CG_k$ is set as the discharge target related to a second safety operation for preventing performance degradation hazard, the control unit 230 may conduct the discharge circuit $DB_k$ among the two discharge circuits $DA_k$, $DB_k$ in preference to the discharge circuit $DA_k$. That is, at least the switch $SB_k$ among the two switches $SA_k$, $SB_k$ may be turned on.

The switches $SA_k$, $SB_k$ shown in FIGS. 2 and 3 may be connected to the control unit 230 through a signal line. The switches $SA_k$, $SB_k$ may include any one of known switching devices such as a mechanical contactor or a field effect transistor (FET) or a combination thereof.

When the cell group $CG_k$ is set as the discharge target, the control unit 230 may send a turn-on signal (for example, a predetermined level or more of voltage pulse) to at least one of the two switches $SA_k$, $SB_k$ connected to the cell group $CG_k$ through the signal line. Each of the two switches $SA_k$, $SB_k$ may be switched from turn-off state to turn-on state in response to the turn-on signal sent by the control unit 230.

The two discharge loads $RA_k$, $RB_k$ may have a resistance value that is preset to be equal or different from each other. When both of the two discharge loads $RA_k$, $RB_k$ are conducted, greater heat generation occurs compared to a case where any one of the two discharge loads $RA_k$, $RB_k$ is conducted alone. According to the features of circuits, when the two discharge loads $RA_k$, $RB_k$ are connected in parallel, the combined resistance value of the two discharge loads $RA_k$, $RB_k$ decreases, allowing a larger current to flow at the same voltage, and the amount of heat is proportional to the square of the current flowing in the resistor.

Accordingly, the control unit 230 may turn on any one of the two switches $SA_k$, $SB_k$ in a situation where the degree of low temperature abnormality of the cell group $CG_k$ is low, and turn on the two switches $SA_k$, $SB_k$ in a situation where the degree of low temperature abnormality of the cell group $CG_k$ is high.

At least one of the two discharge loads $RA_k$, $RB_k$ may be physically spaced apart from the plurality of cell groups $CG_1 \sim CG_N$ by the overheat prevention member 101.

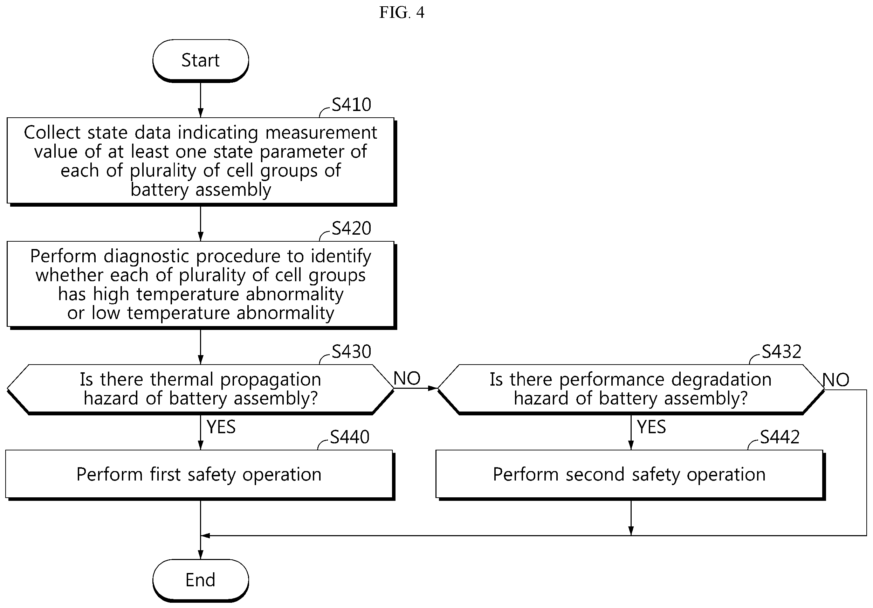

FIG. 4 is a flowchart referenced in briefly describing a battery management method according to another embodiment of the present disclosure. The method according to FIG. 4 may be periodically or aperiodically performed in a repeated manner.

Referring to FIG. 4, in step S410, the control unit 230 collects the state data of each of the plurality of cell groups $CG_1 \sim CG_N$ from the sensing unit 210.

In step S420, the control unit 230 performs the diagnostic procedure to identify whether each of the plurality of cell groups $CG_1 \sim CG_N$ has high temperature abnormality or low temperature abnormality based on the collected state data. In the step S420, any one of the procedure for identifying high temperature abnormality and the procedure for identifying low temperature abnormality may be performed. When both the procedure for identifying high temperature abnormality and the procedure for identifying low temperature abnormality are performed for each of the plurality of cell groups $CG_1 \sim CG_N$, the procedure for identifying high temperature abnormality may precede the procedure for identifying low temperature abnormality.

In the step S420, an operation of recording identification information of each cell group identified as having high temperature abnormality in a first abnormal list and/or an operation of recording identification information of each cell group identified as not having high temperature abnormality in a first normal list may be performed. In the step S420, an operation of recording identification information of each cell group identified as having low temperature abnormality in a second abnormal list and/or an operation of recording identification information of each cell group identified as not having low temperature abnormality in a second normal list may be performed. As each of the plurality of cell groups $CG_1 \sim CG_N$ is fixedly positioned at a unique area in the battery assembly 100, the identification information for each cell group corresponds to the physical location for each cell group.

In step S430, the control unit 230 determines whether there is thermal propagation hazard of the battery assembly 100 based on the result of the diagnosis performed in the step S420. When a value of the step S430 is "YES", the method according to FIG. 4 may move to step S440. When the value of the step S430 is "NO", the method according to FIG. 4 may move to step S432.

In the step S432, the control unit 230 determines whether there is performance degradation hazard of the battery assembly 100 based on the result of the diagnosis performed in the step S420. When a value of the step S432 is "YES", the method according to FIG. 4 may move to step S442. When the value of the step S432 is "NO", the method according to FIG. 4 may end.

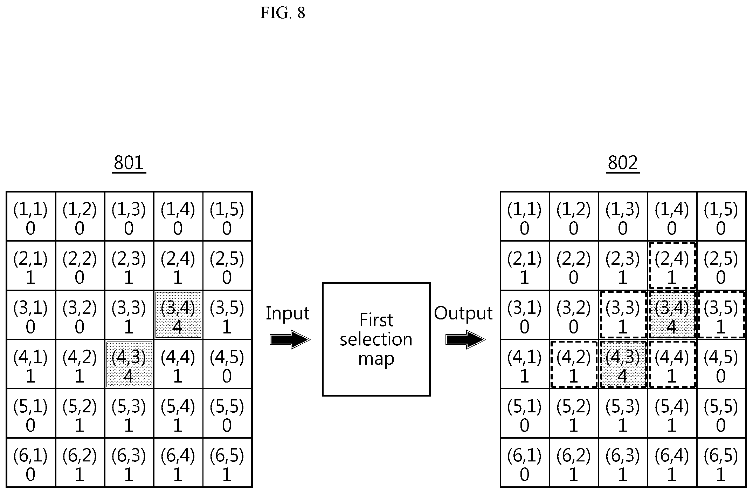

In the step S440, the control unit 230 performs the first safety operation. A detailed description of the first safety operation will be described with reference to FIGS. 8 to 12 below.

In the step S442, the control unit 230 performs the second safety operation. A detailed description of the second safety operation will be described with reference to FIGS. 8 to 12 below.

Although the flowchart according to FIG. 4 describes that the step S430 is performed earlier than the step S432, it should be understood that this is provided by way of illustration. That is, the step S432 may be performed earlier than the step S430, or the steps S430 and S432 may be performed at the same time.

When the procedure for identifying high temperature abnormality of each of the plurality of cell groups $CG_1 \sim CG_N$ is only performed in the step S420, the steps S432 and S442 may be omitted from the method of FIG. 4. Likewise, when the procedure for identifying low temperature abnormality of each of the plurality of cell groups $CG_1 \sim CG_N$ is only performed in the step S420, the steps S430 and S440 may be omitted from the method of FIG. 4.

In this specification, 'high-temperature abnormal cell group' refers to a cell group identified as having high temperature abnormality, 'low-temperature abnormal cell group' refers to a cell group identified as having low temperature abnormality, and 'normal cell group' refers to a cell group in which neither high temperature abnormality nor low temperature abnormality is identified.

The control unit 230 may calculate a first abnormality index of each high-temperature abnormal cell group, and further determine the first abnormality index of at least one normal cell group. In an embodiment, the first abnormality index of the cell group $CG_k$ may be determined to be equal to or have a predetermined positive correspondence relationship with the measured temperature, a temperature change factor, the measured voltage, a voltage change factor, the measured amount of shock or a shock amount change factor of the cell group $CG_k$. In another embodiment, the first abnormality index of the cell group $CG_k$ may be calculated by applying a predetermined mathematical operation (for example, a weighted sum) to at least one of the measured temperature, the temperature change factor, the measured voltage, the voltage change factor, the measured shock amount or the shock amount change factor of the cell group $CG_k$. For example, at least one function that outputs a value having the positive correspondence relationship with the measured value or the state change factor of each state parameter as the first abnormality index may be used as the mathematical operation.

The control unit 230 may calculate a second abnormality index of each low-temperature abnormal cell group, and further determine the second abnormality index of at least one normal cell group. As the temperature of the low-temperature abnormal cell group is lower, the second abnormality index of the low-temperature abnormal cell group may be higher. In an embodiment, the second abnormality index of the cell group $CG_k$ may be determined to be equal to the measured temperature of the cell group $CG_k$ or have a predetermined negative correspondence relationship with the measured temperature. In another embodiment, the second abnormality index of the cell group $CG_k$ may be determined to be equal to a difference between the measured temperature of the cell group $CG_k$ and a reference temperature (for example, the lower limit of the predetermined normal temperature range) or have the predetermined negative correspondence relationship with the difference.

To identify high temperature abnormality, the control unit 230 may calculate the state change factor of at least one state parameter of each of the plurality of cell groups $CG_1 \sim CG_N$ based on the state data of each of the plurality of cell groups $CG_1 \sim CG_N$. As an example, when the state parameter is 'temperature', at least one of a 'temperature rise amount' or a 'temperature rise rate' for a predetermined time may be calculated as the state change factor (i.e., the temperature change factor). As another example, when the state parameter is 'voltage', at least one of a 'voltage drop amount' or a 'voltage drop rate' for a predetermined time may be calculated as the state change factor (i.e., the voltage change factor).

The control unit 230 may compare at least one state change factor of each of the plurality of cell groups $CG_1 \sim CG_N$ with a reference range (different from the reference range compared with the state parameter).

The procedure for identifying high temperature abnormality may be performed based on the results of comparison with one reference range, or two or more reference ranges. As an example, each cell group having the temperature rise rate outside of the reference range (associated with the temperature rise rate) may be identified as having high temperature abnormality, and each of the remaining cell groups may be identified as not having high temperature abnormality. As another example, each cell group having values of three state parameters (for example, the measured temperature, the temperature rise rate and the voltage drop rate) outside of three reference ranges related to the three state parameters may be identified as having high temperature abnormality, and each of the remaining cell groups may be classified as a normal cell group.

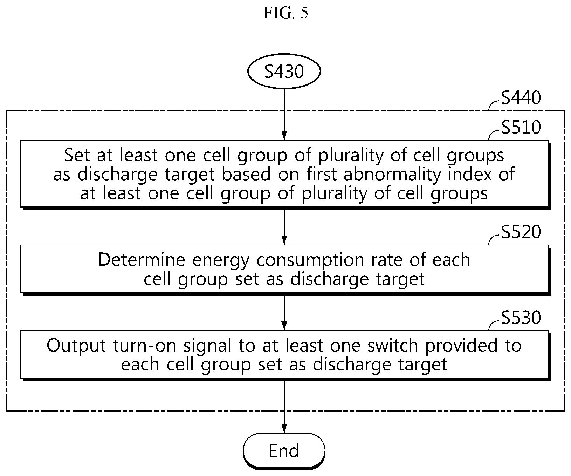

FIG. 5 is a flowchart referenced in briefly describing an example of a set of routines included in the step S440 of FIG. 4.

Referring to FIG. 5, in step S510, the control unit 230 sets at least one cell group of the plurality of cell groups $CG_1 \sim CG_N$ as the discharge target based on the first abnormality index of at least one cell group of the plurality of cell groups $CG_1 \sim CG_N$. The procedure for setting the discharge target in the step S510 may be performed based on the first abnormality index of each high-temperature abnormal cell group, and may be performed further based on the first abnormality index of at least one normal cell group.

In an embodiment, each of all the high-temperature abnormal cell groups may be set as the discharge target, and at least one normal cell group may be set as an additional discharge target. This is because the high-temperature abnormal cell group may have a thermal influence on the surrounding area, increasing the likelihood that a fire will occur in the normal cell group adjacent to the high-temperature abnormal cell group.

In another embodiment, only each high-temperature abnormal cell group having discharge effectiveness among all the high-temperature abnormal cell groups may be set as the discharge target, and at least one normal cell group may be set as the additional discharge target. The discharge effectiveness of the cell group $CG_k$ may refer to a state in which the first abnormality index of the cell group $CG_k$ can be reduced below a predetermined level when forced discharging is performed immediately. For example, in a situation in which a fire has already occurred in the cell group $CG_k$ or the cell group $CG_k$ has a very high fire likelihood, even if forced discharging is performed immediately on the cell group $CG_k$, it is impossible to prevent the fire, or rather, the forced discharging may aggravate high temperature abnormality, and thus, the cell group $CG_k$ may have no discharge effectiveness.

Each cell group having the first abnormality index that is equal to or larger than a predetermined threshold value may be determined as high-temperature abnormal cell group. The high-temperature abnormal cell group having the first abnormality index that is equal to or higher than a predetermined allowable value (larger than the threshold value) may be determined as having no discharge effectiveness. The control unit 230 may exclude each high-temperature abnormal cell group having no discharge effectiveness from the discharge target.

The control unit 230 may set at least one normal cell group adjacent to each high-temperature abnormal cell group having the first abnormality index that is larger than the threshold value among the plurality of cell groups $CG_1 \sim CG_N$ as the discharge target. Specifically, the control unit 230 may identify a thermal effective area of each high-temperature abnormal cell group based on the first abnormality index of each high-temperature abnormal cell group. The thermal effective area of each of the plurality of cell groups $CG_1 \sim CG_N$ may be preset.

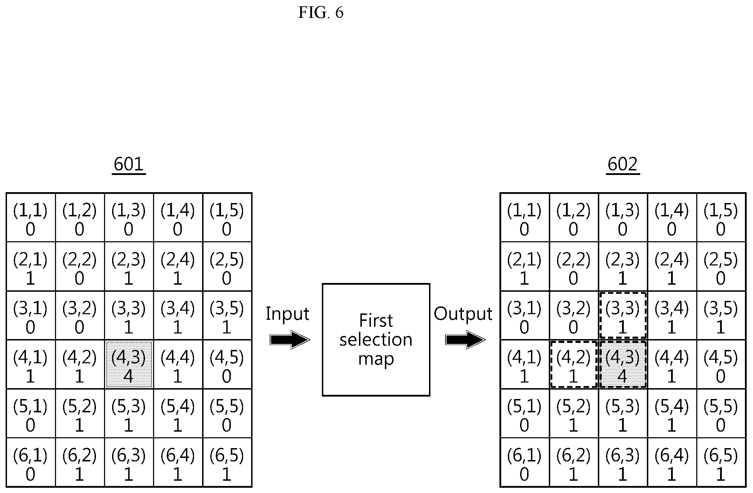

As an example, in FIG. 6 as described below, grids of the coordinates (3,3) and the coordinates (4,2) marked with the dotted line border may correspond to a sub-region included in the thermally effective area when the first abnormality index of the cell group corresponding to the coordinates (4,3) is 4. The memory device may pre-record a lookup table representing a correspondence relationship between the first abnormality index and the thermally effective area for each cell group. The control unit 230 may set each normal cell group located in the thermally effective area of each high-temperature abnormal cell group as the discharge target. In relation to high temperature abnormality, the memory device may pre-record information indicating the thermally effective area for each cell group. When any one cell group is positioned at the thermally effective area of another cell group, it may represent that the two cell groups are adjacent to each other.

In step S520, the control unit 230 determines an energy consumption rate of each cell group set as the discharge target. The control unit 230 may determine the energy consumption rate of each cell group set as the discharge target based on the first abnormality index (or its corrected first abnormality index) of each cell group set as the discharge target. In an embodiment, the control unit 230 may determine a duty ratio of the turn-on signal for at least one switch (for example, $SA_2$) connected to each cell group (for example, $CG_2$) set as the discharge target by applying a predetermined positive correspondence relationship to the first abnormality index (or its corrected first abnormality index) of each cell group set as the discharge target. As the duty ratio of the turn-on signal outputted to at least one switch (for example, $SA_2$) increases, the turn-on period per unit time of the switch (for example, $SA_2$) increases, and the energy consumption rate of the cell group (for example, $CG_2$) may increase. The energy consumption rate for the discharge target may be preset, and in this case, the S520 may be omitted from the method of FIG. 5.

In step S530, the control unit 230 outputs the turn-on signal to at least one switch connected to each cell group set as the discharge target. Each cell group set as the discharge target may be individually forcibly discharged by the step S530 to block thermal propagation in the battery assembly 100 or at least slow down thermal propagation noticeably, thereby limiting thermal propagation-induced hazards.

The control unit 230 may perform the step S510 (the procedure for setting the discharge target) of FIG. 5 by calling the first selection map stored in the memory device. The first selection map may be pre-stored to prevent thermal propagation of the battery assembly 100.

The first selection map may be a data table set, a function set or a combination thereof, pre-designed to return the identification information of each cell group set as the discharge target among the plurality of cell groups $CG_1 \sim CG_N$ when the first abnormality index of at least one cell group of the plurality of cell groups $CG_1 \sim CG_N$ is entered.

As an example, the first selection map may include a plurality of data tables prepared, respectively, to indicate a plurality of discharge target sets (each discharge target set refers to a list of one or more discharge targets) that rely on the first abnormality index for each cell group. When any one data table corresponding to the input data is outputted from the first selection map, the control unit 230 may set each cell group indicated in the output data table as the discharge target.

As another example, the first selection map may include a plurality of functions related to the plurality of cell groups $CG_1 \sim CG_N$ in a one-to-one relationship. Equation 1 below is an example of a function related to the k-th cell group $CG_k$ that may be included in the first selection map.

<Equation 1>

$$FA_{k\_corrected} = FA_k + f_1(FA_1, FA_2, \cdots, FA_{k-1}, FA_{k+1}, \cdots, FA_N) = FA_k + \Delta FA_k$$

In the above Equation 1, when k is a natural number that is equal to or smaller than N, $FA_k$ denotes the first abnormality index of the k-th cell group $CG_k$, $FA_{k\_corrected}$ denotes the corrected first abnormality index of the k-th cell group $CG_k$, and $\Delta FA_k$ denotes a corrected index reflecting thermal proximity between the k-th cell group $CG_k$ and each cell group other than the k-th cell group $CG_k$. That is, in the above Equation 1, the function $f_1()$ may be preset output $\Delta FA_k$ when the first abnormality indices of (N-1) cell groups other than the k-th cell group $CG_k$ are entered. Those skilled in the art will easily understand that the first abnormality index of each of the (N-1) cell groups other than the k-th cell group $CG_k$ may have a predetermined positive correspondence relationship with $\Delta FA_k$.

The first selection map may output a result value (for example, the identification information of the k-th cell group) indicating that the k-th cell group $CG_k$ was set as the discharge target when $FA_{k\_corrected}$ is equal to or larger than the threshold value. In contrast, the first selection map may output the result value indicating that the k-th cell group $CG_k$ was excluded from the discharge target when $FA_{k\_corrected}$ is less than the threshold value or equal to or larger than the allowable value.

FIGS. 6 to 9 are diagrams referenced in describing the first selection map used to perform the first safety operation.

In describing FIGS. 6 to 9, to help understanding, the input/output data is visualized and displayed in the form of a 6×5 matrix data table, and it is assumed that 30 grids of the data table correspond to the physical locations of the plurality of cell groups $CG_1$~$CG_N$ (assuming N=30) in the battery assembly 100, respectively. In addition, in each grid, the value (coordinates) in the first line indicates the physical location of the cell group corresponding to the corresponding grid, and the value in the second line indicates the first abnormality index of the cell group corresponding to the corresponding grid. In addition, the coordinates (i,j) may correspond to ((i-1)× n+j))-th cell group. For example, where n=5, the coordinates (1,1) may correspond to the first cell group $CG_1$, the coordinates (3,2) may correspond to the 12th cell group $CG_{12}$, and the coordinates (2,5) may correspond to the 10th cell group $CG_{10}$. Also, it is assumed that the threshold value is 2, and the allowable value is 6.

First, referring to FIG. 6, in the left data table representing input data 601, the grid corresponding to the coordinates (4,3) is only shaded. The shaded grid indicates that the cell group $CG_{18}$ corresponding to the corresponding grid has high temperature abnormality, revealing that as opposed to the remaining grids, the first abnormality index of the corresponding grid is 4 that is larger than the threshold value of 2.

Seeing the right data table representing output data 602, the shading of the grid corresponding to the coordinates (4,3) is common to the input data 601 and the output data 602, but the grid corresponding to the coordinates (4,3) as well as two grids corresponding to two coordinates (4,2) and (3,3) are marked with dotted line border. The grid marked with the dotted line border represents the cell group set as the discharge target. The two coordinates (4,2) and (3,3) may indicate two cell groups $CG_{13}$, $CG_{17}$. That is, the two cell groups $CG_{13}$, $CG_{17}$ may be identified as be highly likely to have high temperature abnormality due to the adjacent cell group $CG_{18}$ although they are currently in normal state free of high temperature abnormality.

When the output data 602 is outputted from the first selection map, the control unit 230 may set three cell groups $CG_{13}$, $CG_{17}$, $CG_{18}$ corresponding to the coordinates (4,3), (4,2), and (3,3) as the discharge target.

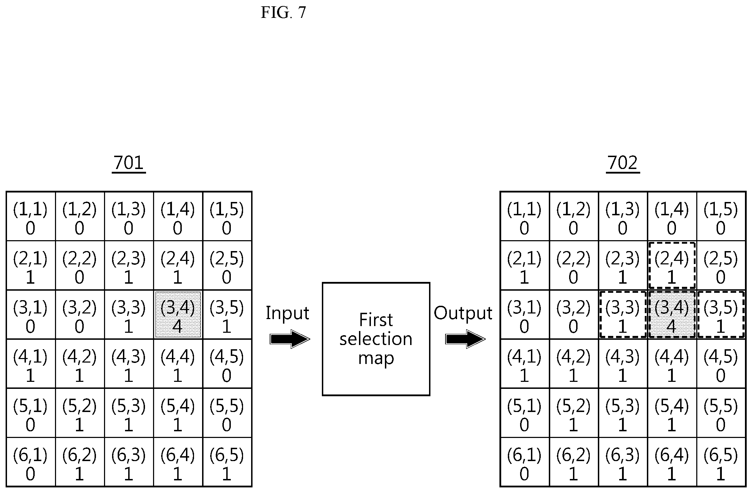

Subsequently, referring to FIG. 7, in the left data table representing input data 701, the grid corresponding to the coordinates (3,4) is only shaded, revealing that the first abnormality index of the coordinates (3,4) is 4.

Seeing the right data table representing output data 702, the shading of the grid corresponding to the coordinates (3,4) is common to the input data 701 and the output data 702, but the grid corresponding to the coordinates (3,4) as well as three grids corresponding to three coordinates (2,4), (3,3), and (3,5) are marked with the dotted line border. That is, three cell groups $CG_9$, $CG_{13}$, $CG_{15}$ corresponding to the three coordinates (2,4), (3,3), and (3,5) may have been identified as being highly likely to have high temperature abnormality due to the cell group $CG_{14}$ of the coordinates (3,4) although they are currently in normal state.

When comparing FIG. 6 with FIG. 7, the two input data 601, 701 equally indicate that only one cell group having the first abnormality index of 4 has high temperature abnormality, but the output data 602 indicates that two normal cell groups $CG_{13}$, $CG_{17}$ are set as the discharge target, while the output data 702 indicates that three normal cell groups $CG_9$, $CG_{13}$, $CG_{15}$ are set as the discharge target. This may reflect pre-test or simulation results showing that the influence on the surrounding area changes depending on the physical location of each high-temperature abnormal cell group even though the number of high-temperature abnormal cell groups is equal to the first abnormality index.

When the output data 702 is outputted from the first selection map, the control unit 230 may set one high-temperature abnormal cell group $CG_{14}$ and three normal cell groups $CG_9$, $CG_{13}$, $CG_{15}$ as the discharge target.

Referring to FIG. 8, in the left data table representing input data 801, two grids corresponding to the coordinates (4,3) and (3,4) are shaded. The shading of the coordinates (4,3) is common to the input data 601 and the input data 801, and the shading of the coordinates (3,4) is common to the input data 701 and the input data 801.

Seeing the right data table representing output data 802, the shading of the two grids is common to the input data 801 and the output data 802, and the two grids corresponding to the coordinates (4,3) and (3,4) as well as four grids corresponding to the coordinates (2,4), (3,3), (3,5) and (4,2) are marked with the dotted line border. Here, the dotted line border of the coordinates (3,3) and (4,2) is common to the output data 602 and the output data 802, and the dotted line border of the coordinates (2,4), (3,3) and (3,5) is common to the output data 702 and the output data 802.

It should be noted that the grid of the coordinates (4,4) is not marked with the dotted line border in the output data 602 and the output data 702 but is marked with the dotted line border in the output data 802. This may reflect pre-test or simulation results showing that a normal cell group positioned at an overlapping area of thermal effective areas of two or more high-temperature abnormal cell groups has very high fire hazards. That is, the coordinates (4,4) may be within the overlapping area of thermal effective areas related to the coordinates (4,3) and (3,4).

When the output data 802 is outputted from the first selection map, the control unit 230 may set two high-temperature abnormal cell groups $CG_{14}$, $CG_{18}$ and five normal cell groups $CG_9$, $CG_{13}$, $CG_{15}$, $CG_{17}$, $CG_{19}$ as the discharge target.

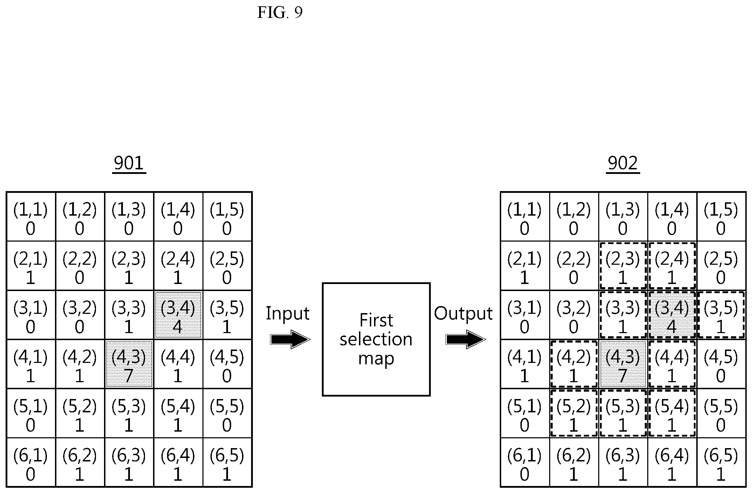

Referring to FIG. 9, in the left data table representing input data 901, two grids corresponding to the coordinates (4,3) and (3,4) are shaded. The shading of the coordinates (4,3) and (3,4) is common to the input data 801 and the input data 901. However, as opposed to the input data 801, the first abnormality index of the coordinates (4,3) of the input data 901 is 7 (larger than the allowable value of 6).

Seeing the data table on the right representing output data 902, the shading of the two grids of the coordinates (4,3) and (3,4) and five grids of the coordinates (2,4), (3,3), (3,5), (4,2) and (4,4) marked with the dotted line border are common to the output data 802 and the output data 902.

In the output data 902, as opposed to the output data 802, four grids of the coordinates (2,3), (5,2), (5,3) and (5,4) are additionally marked with the dotted line border. In particular, the grid of the coordinates (2,3) spaced apart from the grid of the coordinates (4,3) by the grid of the coordinates (3,3) are also marked with the dotted line border. This may reflect pre-test or simulation results showing that as the first abnormality index of the high-temperature abnormal cell group increases, the fire hazards also increases for other cell group positioned at the surrounding area far away from the high-temperature abnormal cell group.

It should be noted that as opposed to the output data 602, 802 of FIGS. 6 and 8, the grid of the coordinates (4,3) of the output data 902 is not marked with the dotted line border. That is, it may indicate that the cell group $CG_{18}$ corresponding to the coordinates (4,3) is excluded from the discharge target despite high temperature abnormality. This may be because the cell group $CG_{18}$ has no discharge effectiveness.

When the output data 902 is outputted from the first selection map, the control unit 230 may set ten cell groups $CG_8$, $CG_9$, $CG_{13}$, $CG_{14}$, $CG_{15}$, $CG_{17}$, $CG_{19}$, $CG_{22}$, $CG_{23}$, $CG_{24}$ as the discharge target.

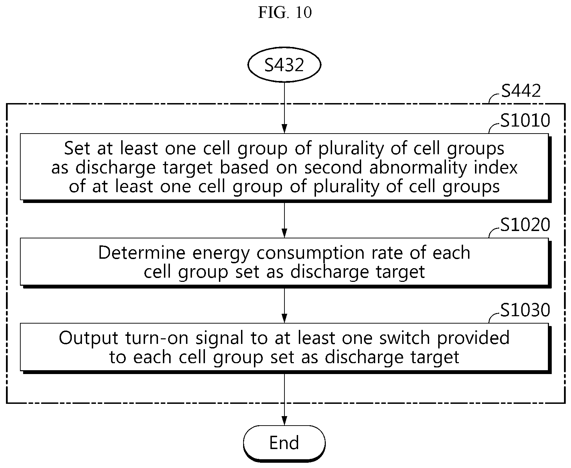

The first safety operation related to high temperature abnormality has been hereinabove described in detail with reference to FIGS. 5 to 9. Hereinafter, the second safety operation related to low temperature abnormality will be described in detail with reference to FIGS. 10 to 14.

FIG. 10 is a flowchart referenced in briefly describing an example of a set of routines included in the step S442 of FIG. 4.

Referring to FIG. 10, in step S1010, the control unit 230 sets at least one cell group of the plurality of cell groups $CG_1 \sim CG_N$ as the discharge target based on the second abnormality index of at least one cell group of the plurality of cell groups $CG_1 \sim CG_N$. The procedure for setting the discharge target in the step S1010 may be performed based on the second abnormality index of each low-temperature abnormal cell group, and may be performed further based on the second abnormality index of at least one normal cell group.

In an embodiment, each of all low-temperature abnormal cell groups may be set as the discharge target, and at least one normal cell group may be set as the additional discharge target.

In another embodiment, only each low-temperature abnormal cell group having discharge effectiveness among all low-temperature abnormal cell groups may be set as the discharge target, and at least one normal cell group may be set as the additional discharge target.

The control unit 230 may set at least one normal cell group adjacent to each low-temperature abnormal cell group having the second abnormality index that is larger than the threshold value among the plurality of cell groups $CG_1 \sim CG_N$ as the discharge target. The remaining capacity (or State Of Charge (SOC)) of each normal cell group set as the discharge target may be larger than the remaining capacity (or SOC) of each adjacent low-temperature abnormal cell group.

In step S1020, the control unit 230 determines the energy consumption rate of each cell group set as the discharge target. The energy consumption rate of each discharge target may be determined based on at least one of the second abnormality index, the remaining capacity or the SOC of the discharge target. In an embodiment, the control unit 230 may determine the duty ratio of the turn-on signal for at least one switch (for example, $SB_1$) connected to the cell group (for example, $CG_1$) by applying a predetermined positive correspondence relationship to the second abnormality index (or the corrected second abnormality index) of the cell group (for example, $CG_1$) set as the discharge target. As the duty ratio of the turn-on signal outputted to the switch (for example, $SB_1$) increases, the amount of heat generated from the discharge load (for example, $RB_1$) conducted by the switch (for example, $SB_1$) increases, and the temperature of the cell group (for example, $CG_1$) may increase quickly. The energy consumption rate for the discharge target may be preset, and in this case, the step S1020 may be omitted from the method of FIG. 10.

In step S1030, the control unit 230 outputs the turn-on signal to at least one switch connected to each cell group set as the discharge target. When the temperature of each discharge target is increased by the step S1030, the low temperature abnormality of each discharge target may be eliminated and return to the normal temperature range quickly.

The control unit 230 may perform the step S1010 (the procedure for setting the discharge target) of FIG. 10 by calling the second selection map stored in the memory device. The second selection map may be pre-stored to prevent performance degradation of the battery assembly 100.

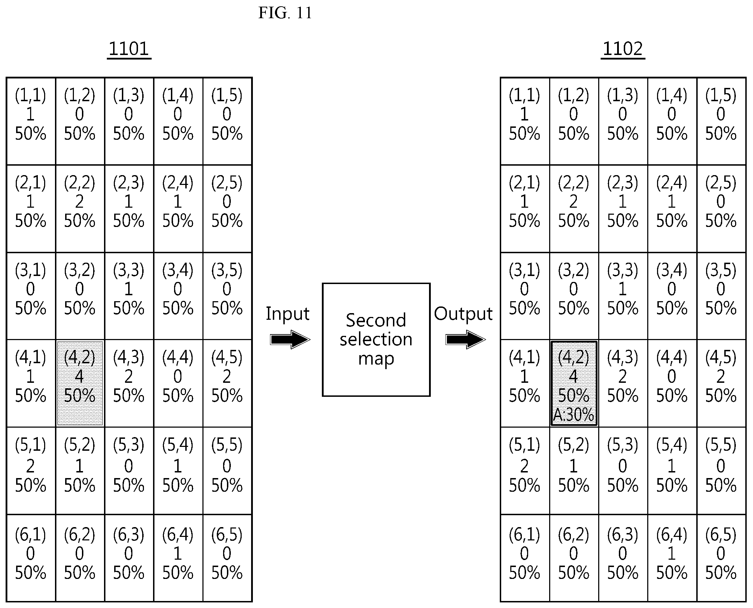

The second selection map may be a data table set, a function set or a combination thereof, pre-designed to return the result data set (see the reference numbers 1102, 1202, 1302, 1402 in FIGS. 11 to 14) for each cell group set as the discharge target among the plurality of cell groups $CG_1 \sim CG_N$ when the state data set (see the reference numbers 1101, 1201, 1301, 1401 in FIGS. 11 to 14) of at least one cell group of the plurality of cell groups $CG_1 \sim CG_N$ is entered. The state data set may include at least one of the second abnormality index, the remaining capacity or the SOC. The result data set may include at least one of the identification information or switch control information of each cell group set as the discharge target. The switch control information may indicate at least one of the switch number to be turned on or the duty ratio. The switch control information may indicate the discharge intensity (for example, the duty ratio for each switch) that will be applied to the discharge target.

As an example, the second selection map may include a plurality of data tables prepared, respectively, to indicate a plurality of discharge target sets (each discharge target set refers to a list of one or more discharge targets) that rely on the second abnormality index for each cell group. When any one data table corresponding to the input data is outputted from the second selection map, the control unit 230 may set each cell group indicated in the output data table as the discharge target.

As another example, the second selection map may include a plurality of functions related to the plurality of cell groups $CG_1 \sim CG_N$ in a one-to-one relationship. Equation 2 below is an example of a function related to the k-th cell group $CG_k$ that may be included in the second selection map.

<Equation 2>

$$FB_{k\_corrected} = FB_k + f_2(FB_1, FB_2, \cdots, FB_{k-1}, FB_{k+1}, \cdots, FB_N) = FB_k + \Delta FB_k$$

In the above Equation 2, when k is a natural number of N or smaller, $FB_k$ denotes the second abnormality index of the k-th cell group $CG_k$, $FB_{k\_corrected}$ denotes the corrected second abnormality index of the k-th cell group $CG_k$, and $\Delta FB_k$ denotes the corrected index reflecting thermal proximity between the k-th cell group $CG_k$ and each cell group other than the k-th cell group. That is, in the above Equation 2, the function $f_2()$ may be preset to output $\Delta FB_k$ when the second abnormality indices of (N-1) cell groups other than the k-th cell group $CG_k$ are entered. Those skilled in the art will easily understand that the second abnormality index of each of the (N-1) cell groups other than the k-th cell group $CG_k$ may have a predetermined positive correspondence relationship with $\Delta FB_k$.

The second selection map may output the result value (for example, the identification information of the k-th cell group) indicating that the k-th cell group $CG_k$ is set as the discharge target when $FB_{k\_corrected}$ is equal to or larger than the threshold value. In contrast, the second selection map may output the result value indicating that the k-th cell group $CG_k$ is excluded from the discharge target when $FB_{k\_corrected}$ is less than the threshold value.

The discharge intensity of each discharge target determined by the second selection map may be determined based on the state data of at least one of the discharge target or the abnormal cell group adjacent to the discharge target. As an example, the temperature of the discharge target may have a predetermined negative correspondence relationship with the discharge intensity of the discharge target. As another example, the SOC (or remaining capacity) of the discharge target may have a predetermined positive correspondence relationship with the discharge intensity of the discharge target.

FIGS. 11 to 14 are diagrams referenced in describing the second selection map used to perform the second safety operation.

In describing FIGS. 11 to 14, to help understanding, the input/output data is visualized and displayed in the form of a $6 \times 5$ matrix data table, and it is assumed that 30 grids of the data table correspond to the physical locations of the plurality of cell groups $CG_1 \sim CG_N$ (assuming N=30) in the battery assembly 100, respectively. In addition, in each grid, the value (coordinates) in the first line indicates the physical location of the cell group corresponding to the corresponding grid, the value in the second line indicates the second abnormality index of the cell group corresponding to the corresponding grid, and the value in the third line indicates the SOC of the cell group corresponding to the corresponding grid. The value in the third line may indicate the remaining capacity instead of the SOC.

In addition, the coordinates (i, j) may correspond to ((i-1)×n+j)-th cell group. For example, where n = 5, the coordinates (1,1) may correspond to the first cell group $CG_1$, the coordinates (3,2) may correspond to the 12th cell group $CG_{12}$, and the coordinates (2,5) may correspond to the 10th cell group $CG_{10}$.

First, referring to FIG. 11, in the left data table representing input data 1101 as the state data set, the grid corresponding to the coordinates (4,2) is only shaded. The shaded grid indicates that the cell group corresponding to the corresponding grid has low temperature abnormality.

Seeing the right data table representing output data 1102 as the result data set, the shading of the grid corresponding to the coordinates (4,2) is common to the input data 1101 and the output data 1102, and it is also marked with the bold line border. The grid marked with the bold line border indicates that it has been set as the discharge target. In addition, the grid corresponding to the coordinates (4,2) additionally has 'A : 30%' in the fourth line, indicating the switch control information. In the fourth line, 'A' may indicate the identification number of the switch to be turned on, and '30%' may indicate the duty ratio of the turn-on signal.

When the output data 1102 is outputted from the second selection map, the control unit 230 may perform an operation of forcibly discharging one cell group $CG_{17}$ corresponding to the coordinates (4,2) set as the discharge target in the output data 1102 as the second safety operation. As an example, the control unit 230 may output the turn-on signal having the duty ratio of 30% to the switch $SA_{17}$ connected to the cell group $CG_{17}$, but may not output the turn-on signal to all the remaining switches of the discharging unit 220.

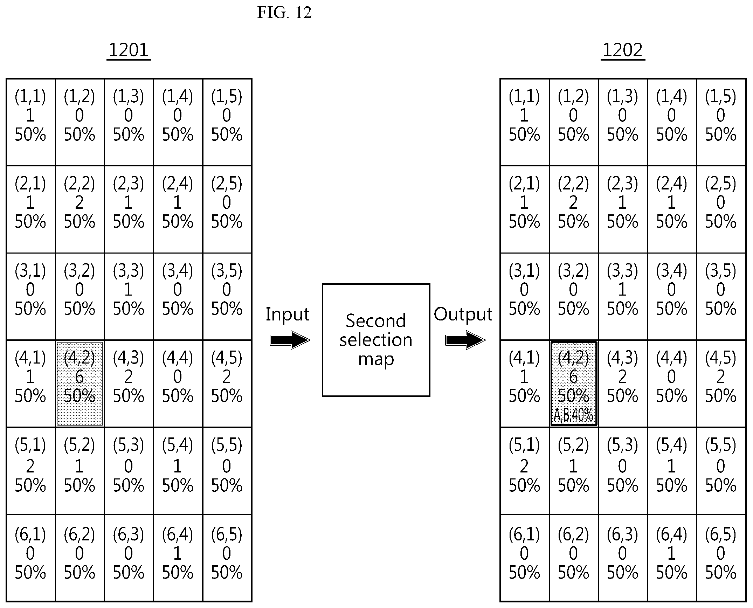

Subsequently, referring to FIG. 12, the shading of the grid corresponding to the coordinates (4,2) is common to the input data 1101 of FIG. 11 and the input data 1201, but as opposed to the input data 1101, the second abnormality index is increased from 4 to 6. That is, the situation of FIG. 12 may be a situation in which the need to increase the temperature is higher due to the lower temperature of the cell group $CG_{17}$ than FIG. 11.

The marking of the grid corresponding to the coordinates (4,2) with the bold line border is common to the output data 1102 of FIG. 11 and the output data 1202 shown in FIG. 12. However, as opposed to the output data 1102 of FIG. 1, the switch control information of the coordinates (4,2) is changed from 'A : 30%' to 'A,B : 40%'. 'A, B: 40%' is the switch control information that triggers faster temperature increase than 'A : 30%'. That is, in 'A, B : 40%', 'A' and 'B' may indicate the identification number of the switch to be turned on, and '40%' may indicate the duty ratio of the turn-on signal.

When the output data 1202 is outputted from the second selection map, the control unit 230 may perform an operation of discharging the cell group $CG_{17}$ set as the discharge target in the output data 1202 as the second safety operation. As an example, the control unit 230 may individually output the turn-on signal having the duty ratio of 40% to two switches $SA_{17}$, $SB_{17}$ connected to the cell group $CG_{17}$, but may not output the turn-on signal to all the remaining switches of the discharging unit 220.

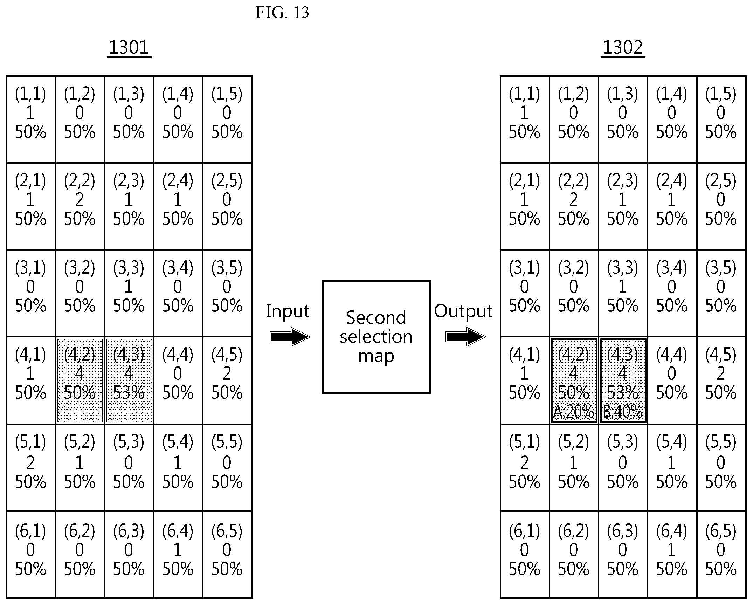

Subsequently, referring to FIG. 13, the input data 1201 is different from the input data 1101 of FIG. 11 in that two grids corresponding to the coordinates (4,2) and (4,3) are shaded. In addition, information corresponding to the coordinates (4,2) is common to the input data 1101 and the input data 1201, but information corresponding to the coordinates (4,3) shows a higher second abnormality index and a higher SOC than the input data 1101.

When comparing the output data 1302 shown in FIG. 13 with the output data 1102 of FIG. 11, two grids marked with the bold line border indicate that two cell groups $CG_{17}$, $CG_{18}$ corresponding to the two coordinates (4,2) and (4,3) are set as the discharge target.

Meanwhile, the state data set of the coordinates (4,2) of the input data 1301 is the same as the state data set of the coordinates (4,2) of the input data 1101, but the switch control information of the coordinates (4,2) of the output data 1302 is different from the switch control information of the coordinates (4,2) of the output data 1102. Specifically, in the output data 1302, the switch control information of the grid corresponding to the coordinates (4,2) is changed from 'A : 30%' to 'A : 20%', and 'B: 40%' as the switch control information is added to the grid corresponding to the coordinates (4,3).

When the output data 1302 is outputted from the second selection map, the control unit 230 may perform an operation of discharging two cell groups $CG_{17}$, $CG_{18}$ set as the discharge target in the output data 1302 as the second safety operation. As an example, the control unit 230 may output the turn-on signal having the duty ratio of 20% to the switch $SA_{17}$ connected to the cell group $CG_{17}$ and the turn-on signal having the duty ratio of 40% to the switch $SB_{18}$ connected to the cell group $CG_{18}$ at the same time, but may not output the turn-on signal to all the remaining switches of the discharging unit 220.

The two cell groups $CG_{17}$, $CG_{18}$ have the same second abnormality index, but higher discharge intensity is applied to the cell group $CG_{18}$, taking into account the fact that (i) the SOC of the cell group $CG_{18}$ is higher than that of the cell group $CG_{17}$ and (ii) the two cell groups $CG_{17}$, $CG_{18}$ are adjacent to each other. When the higher discharge intensity is applied to the cell group $CG_{18}$, an increase in SOC deviation between the two cell groups $CG_{17}$, $CG_{18}$ may be suppressed, and the temperature of the cell group $CG_{18}$ may be increased by heat generated from the discharge load $RB_{18}$ provided to the cell group $CG_{18}$, and the temperature of the cell group $CG_{17}$ may be indirectly increased as well.

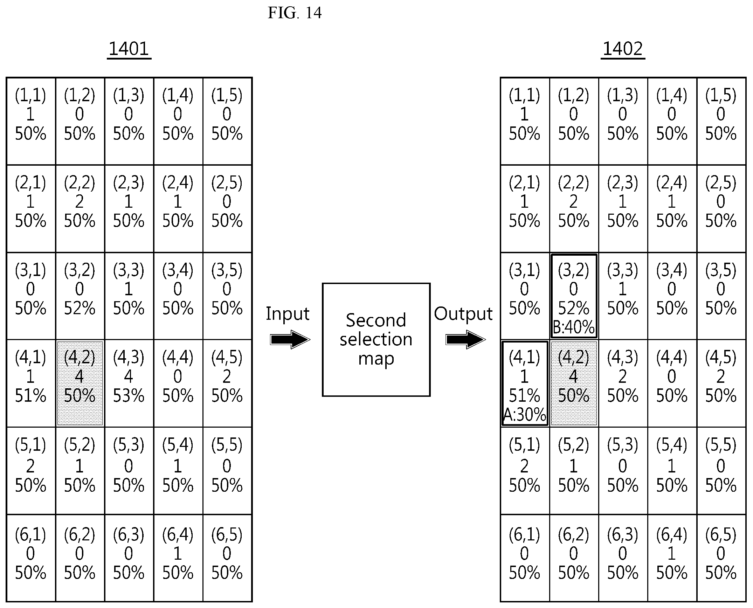

Subsequently, referring to FIG. 14, the shading of the grid corresponding to the coordinates (4,2) is common to the input data 1101 of FIG. 11 and the input data 1401, and the state data set of the coordinates (4,2) is also the same.

However, they are different in that the SOC of the coordinates (3,2) and the coordinates (4,1) of the input data 1401 is higher than the SOC of the coordinates (3,2) and the coordinates (4,1) of the input data 1101. In the input data 1401, the two grids corresponding to the coordinates (3,2) and the coordinates (4,1) are not shaded, indicating that the two cell groups $CG_{12}$, $CG_{16}$ are free of low temperature abnormality.

Seeing the output data 1402 shown in FIG. 14, the grid of the coordinates (4,2) corresponding to the cell group $CG_{17}$ having low temperature abnormality has no bold line border, and rather, the two grids of the coordinates (3,2) and the coordinates (4,1) corresponding to the two normal cell groups $CG_{12}$, $CG_{16}$ are marked with the bold line border. In other words, the cell group $CG_{17}$ having low temperature abnormality is excluded from the discharge target, and the two cell groups $CG_{12}$, $CG_{16}$ free of low temperature abnormality are set as the discharge target.

When the SOC (or remaining capacity) of at least one normal cell group (for example, $CG_{12}$, $CG_{16}$) positioned in the thermally effective area of the cell group (for example, $CG_{17}$) having low temperature abnormality is higher than the SOC (or remaining capacity) of the cell group (for example, $CG_{17}$) having low temperature abnormality, the control unit 230 may set at least one normal cell group (for example, $CG_{12}$, $CG_{16}$) as the discharge target instead of the cell group (for example, $CG_{17}$) having low temperature abnormality.

When the low temperature abnormality in all of the plurality of low-temperature abnormal cell groups may be eliminated through forced discharging of the remaining cell groups except at least one of the plurality of adjacent low-temperature abnormal cell groups, the control unit 230 may exclude at least one cell group of the plurality of low-temperature abnormal cell groups from the discharge target.

In relation to the low temperature abnormality, information indicating the thermal effective area for each cell group may be pre-recorded in the memory device. When any one cell group is positioned in the thermal effective area of the other cell group, it may represent that the two cell groups are adjacent to each other.

For reference, when the discharging unit 220 includes two switches $SA_k$, $SB_k$ and two discharge loads $RA_k$, $RB_k$ provided to the cell group $CG_k$ as shown in FIG. 3, the discharge load $RB_k$ may be positioned closer to the cell group $CG_k$ than the discharge load $RA_k$. Accordingly, when the duty ratio is constant, it may be advantageous to conducting the discharge load $RB_k$ for increasing the temperature of the cell group $CG_k$ quickly.

The output data 1402 indicates that the switch control information for the cell group $CG_{12}$ is 'B:40 %' and the switch control information for the cell group $CG_{16}$ is 'A:30%'. Accordingly, those skilled in the art will easily understand that the discharge intensity for the cell group $CG_{12}$ is higher than the discharge intensity for the cell group $CG_{16}$.

When the output data 1402 is outputted from the second selection map, the control unit 230 may perform an operation of discharging the two cell groups $CG_{12}$, $CG_{16}$ set as the discharge target as the second safety operation. As an example, the control unit 230 may output the turn-on signal having the duty ratio of 40% to the switch $SB_{12}$ connected to the cell group $CG_{12}$ and the turn-on signal having the duty ratio of 30% to the switch $SA_{16}$ connected to the cell group $CG_{16}$ at the same time, but may not output the turn-on signal to all the remaining switches of the discharging unit 220.

The reason why cell group $CG_{17}$ is excluded from the discharge target even though they have low temperature abnormality, while the two cell groups $CG_{12}$, $CG_{16}$ are set as the discharge target even though they do not have low temperature abnormality, may be that at least one of the following factors is considered : (i) the SOC of the two cell groups $CG_{12}$, $CG_{16}$ is higher than that of the cell group $CG_{17}$ or (ii) the two cell groups $CG_{12}$, $CG_{16}$ are adjacent to the cell group $CG_{17}$. In addition, higher discharge intensity may be applied to the cell group $CG_{12}$ of the two cell groups $CG_{12}$, $CG_{16}$, taking into account the smaller second abnormality index of the cell group $CG_{12}$ than the cell group $CG_{16}$ and the higher SOC of the cell group $CG_{12}$ than the SOC of the cell group $CG_{16}$.

When the second safety operation based on the output data 1402 is performed, there are the following advantages. First, an increase in SOC deviation of the three cell groups $CG_{12}$, $CG_{16}$, $CG_{17}$ may be suppressed. Second, the temperature of the cell group $CG_{17}$ may be indirectly increased by heat generated from the two discharge loads $RB_{12}$, $RA_{16}$ without energy consumption of the cell group $CG_{17}$.

In summary, the second selection map may include the plurality of output data preset to correspond to a plurality of low temperature abnormality scenarios that may be created by a combination of the state data sets of the plurality of cell groups $CG_1$~$CG_N$. Each of the input data 1101, 1201, 1301, 1401 shown in FIGS. 11 to 15 may be used as a search keyword to identify any one of the plurality of low temperature abnormality scenarios.

Another embodiment of the present disclosure may provide a computer-readable recording medium having recorded thereon a program for causing a computer to perform the above-described embodiments.

The program may be implemented by hardware components, software components, and/or a combination thereof. The program may be executed by all systems capable of executing computer-readable instructions.

The software may include computer programs, code, instructions or a combination thereof, and may configure a processing device to operate as desired or command the processing device independently or collectively.

The software may be implemented as a computer program including instructions stored on computer-readable storage media. The computer-readable storage media include, for example, magnetic recording media (for example, read-only memory (ROM), random-access memory (RAM), floppy disk, hard disk) and read optical media (for example, CD-ROM, Digital Versatile Disc (DVD). The computer-readable recording medium may be distributed across network-connected computer systems to store and execute the computer-readable code in a distributed manner. The recording medium may be read by a computer, stored in a memory and executed by a processor.

The computer-readable recording medium may be provided in the form of a non-transitory recording medium. Here, the 'non-transitory storage medium' refers to a tangible device and does not include a signal (for example, electromagnetic waves), and this term encompass semi-permanent data storage on the recording medium and temporary data storage. For example, the 'non-transitory storage medium' may include a buffer in which data is temporarily stored.

Additionally, the program may be provided as a computer program product. The computer program product may be a product that is transacted between a seller and a buyer.

The computer program product may include a software program, and a computer-readable recording medium on which the software program is stored. For example, the computer program product may include a product in the form of a software program (for example, a downloadable application) distributed electronically through an electronic device manufacturer or an electronic market. For electronic distribution, at least a part of the software program may be stored on the recording medium or temporarily created. In this case, the recording medium may be a recording medium of the electronic device manufacturer's server, the electronic market's server or an intermediary server that temporarily stores the software program.

The embodiments of the present disclosure described hereinabove are not realized only through the apparatus and method, and may be implemented through programs that perform the functions corresponding to the exemplary configurations of the present disclosure or recording media having the programs recorded thereon, and such implementation may be easily achieved by those skilled in the art from the disclosure of the embodiments previously described.

Although the present disclosure has been hereinabove described with regard to certain embodiments and drawings, the present disclosure is not limited thereto and it is obvious to those skilled in the art that various modifications and changes may be made thereto within the technical aspects of the present disclosure and the scope of the appended claims and their equivalents.

Additionally, as many substitutions, modifications and changes may be made to the present disclosure as described above by those skilled in the art without departing from the technical aspects of the present disclosure, the present disclosure is not limited by the above-described embodiments and the accompanying drawings, and some or all of the embodiments may be selectively combined to allow various modifications.

## Claims

1. A battery management system comprising:

    a sensing unit configured to generate state data of each of a plurality of cell groups included in a battery assembly;
    a discharging unit configured to individually open and close a plurality of discharge paths provided to the plurality of cell groups; and
    a control unit configured to perform a diagnostic procedure to identify whether each of the plurality of cell groups has high temperature abnormality or low temperature abnormality based on the state data,
    wherein the control unit is configured to:

    determine at least one cell group of the plurality of cell groups as a discharge target according to a result of the diagnostic procedure, and
    control the discharging unit so that at least one discharge path provided to the discharge target is conducted.

2. The battery management system according to claim 1,
    wherein the control unit is configured to:
    determine the discharge target using a selection map pre-stored to prevent thermal propagation of the battery assembly when a predetermined number or more of cell groups of the plurality of cell groups are identified as having the high temperature abnormality.

3. The battery management system according to claim 1,
    wherein the control unit is configured to:
    determine the discharge target using a selection map pre-stored to prevent performance degradation of the battery assembly when a predetermined number or more of cell groups of the plurality of cell groups are identified as having the low temperature abnormality.

4. The battery management system according to claim 1,
    wherein the control unit is configured to:

when two discharge paths are provided to the discharge target,
determine at least one discharge path to be conducted among the two discharge paths based on the state data of each cell group identified as having the low temperature abnormality.

5. The battery management system according to claim 1,
wherein the control unit is configured to:
determine a discharge intensity for the discharge target based on the state data of each cell group identified as having the low temperature abnormality.

6. The battery management system according to claim 1,
wherein the discharging unit includes:

a plurality of first discharge circuits respectively connected in parallel to the plurality of cell groups, and
wherein each of the first discharge circuits includes a first switch and a first discharge load connected in series.

7. The battery management system according to claim 6,
wherein the discharging unit further includes:

a plurality of second discharge circuits respectively connected in parallel to the plurality of cell groups, and
wherein each of the second discharge circuits includes a second switch and a second discharge load connected in series.

8. The battery management system according to claim 7,
wherein the second discharge load is positioned closer to the cell group than the first discharge load.

9. The battery management system according to claim 8,
wherein the control unit is configured to:
turn on at least the first switch among the first switch and the second switch connected to the discharge target when the cell group identified as having the high temperature abnormality is set as the discharge target.

10. The battery management system according to claim 8,
wherein the control unit is configured to:
turn on at least the second switch among the first switch and the second switch connected to the discharge target when the cell group identified as having the low temperature abnormality is set as the discharge target.

11. A battery system comprising the battery management system according to any one of claims 1 to 10.

12. A battery management method comprising:

performing a diagnostic procedure to identify whether each of a plurality of cell groups included in a battery assembly has high temperature abnormality or low temperature abnormality based on state data of each of the plurality of cell groups;
determining at least one cell group of the plurality of cell groups as a discharge target according to a result of the diagnostic procedure; and
controlling a discharging unit so that at least one discharge path provided to the discharge target is conducted.

13. The battery management method according to claim 12,
wherein the determining of the discharge target comprises:

when a predetermined number or more of cell groups of the plurality of cell groups are identified as having the high temperature abnormality,
determining the discharge target using a selection map pre-stored to prevent thermal propagation hazards of the battery assembly.

14. The battery management method according to claim 13,
wherein the determining of the discharge target comprises:

when a predetermined number or more of cell groups of the plurality of cell groups are identified as having the low temperature abnormality,
determining the discharge target using a selection map pre-stored to prevent performance degradation of the battery assembly.

15. A computer-readable medium having recorded thereon a program for causing a computer to perform the battery management method according to any one of claims 12 to 14.

FIG. 1

Battery system 1

FIG. 2

FIG. 3

FIG. 4

```
                          ┌─────────┐
                          │  Start  │
                          └─────────┘
                               │
                               ▼                    ⌐S410
        ┌────────────────────────────────────────────┐
        │  Collect state data indicating measurement │
        │   value of at least one state parameter of │
        │      each of plurality of cell groups of   │
        │              battery assembly              │
        └────────────────────────────────────────────┘
                               │
                               ▼                    ⌐S420
        ┌────────────────────────────────────────────┐
        │  Perform diagnostic procedure to identify  │
        │  whether each of plurality of cell groups  │
        │        has high temperature abnormality    │
        │        or low temperature abnormality      │
        └────────────────────────────────────────────┘
                               │
                               ▼            ⌐S430                                    ⌐S432
        ╱───────────────────────────────╲   NO   ╱───────────────────────────────╲  NO
        ⟨   Is there thermal propagation  ⟩────────⟨  Is there performance degradation ⟩────┐
        ╲   hazard of battery assembly?   ╱        ╲    hazard of battery assembly?   ╱     │
                      │ YES                                     │ YES                       │
                      ▼                ⌐S440                     ▼                 ⌐S442      │
        ┌───────────────────────────────┐        ┌───────────────────────────────┐         │
        │  Perform first safety operation│        │ Perform second safety operation│         │
        └───────────────────────────────┘        └───────────────────────────────┘         │
                      │                                          │                           │
                      ▼◄─────────────────────────────────────────┴───────────────────────────┘
                ┌─────────┐
                │   End   │
                └─────────┘
```

FIG. 5

S430

S440

S510

Set at least one cell group of plurality of cell groups
as discharge target based on first abnormality index of
at least one cell group of plurality of cell groups

S520

Determine energy consumption rate of each
cell group set as discharge target

S530

Output turn-on signal to at least one switch provided to
each cell group set as discharge target

End

FIG. 6

EP 4 769 884 A1

EP 4 769 884 A1

FIG. 7

701

| (1,1) 0 | (1,2) 0 | (1,3) 0 | (1,4) 0 | (1,5) 0 |
| (2,1) 1 | (2,2) 0 | (2,3) 1 | (2,4) 1 | (2,5) 0 |
| (3,1) 0 | (3,2) 0 | (3,3) 1 | (3,4) 4 | (3,5) 1 |
| (4,1) 1 | (4,2) 1 | (4,3) 1 | (4,4) 1 | (4,5) 0 |
| (5,1) 0 | (5,2) 1 | (5,3) 1 | (5,4) 1 | (5,5) 0 |
| (6,1) 0 | (6,2) 1 | (6,3) 1 | (6,4) 1 | (6,5) 1 |

Input → First selection map → Output

702

| (1,1) 0 | (1,2) 0 | (1,3) 0 | (1,4) 0 | (1,5) 0 |
| (2,1) 1 | (2,2) 0 | (2,3) 1 | (2,4) 1 | (2,5) 0 |
| (3,1) 0 | (3,2) 0 | (3,3) 1 | (3,4) 4 | (3,5) 1 |
| (4,1) 1 | (4,2) 1 | (4,3) 1 | (4,4) 1 | (4,5) 0 |
| (5,1) 0 | (5,2) 1 | (5,3) 1 | (5,4) 1 | (5,5) 0 |
| (6,1) 0 | (6,2) 1 | (6,3) 1 | (6,4) 1 | (6,5) 1 |

FIG. 8

801

| (1,1) 0 | (1,2) 0 | (1,3) 0 | (1,4) 0 | (1,5) 0 |
| (2,1) 1 | (2,2) 0 | (2,3) 1 | (2,4) 1 | (2,5) 0 |
| (3,1) 0 | (3,2) 0 | (3,3) 1 | (3,4) 4 | (3,5) 1 |
| (4,1) 1 | (4,2) 1 | (4,3) 4 | (4,4) 1 | (4,5) 0 |
| (5,1) 0 | (5,2) 1 | (5,3) 1 | (5,4) 1 | (5,5) 0 |
| (6,1) 0 | (6,2) 1 | (6,3) 1 | (6,4) 1 | (6,5) 1 |

Input → First selection map → Output

802

| (1,1) 0 | (1,2) 0 | (1,3) 0 | (1,4) 0 | (1,5) 0 |
| (2,1) 1 | (2,2) 0 | (2,3) 1 | (2,4) 1 | (2,5) 0 |
| (3,1) 0 | (3,2) 0 | (3,3) 1 | (3,4) 4 | (3,5) 1 |
| (4,1) 1 | (4,2) 1 | (4,3) 4 | (4,4) 1 | (4,5) 0 |
| (5,1) 0 | (5,2) 1 | (5,3) 1 | (5,4) 1 | (5,5) 0 |
| (6,1) 0 | (6,2) 1 | (6,3) 1 | (6,4) 1 | (6,5) 1 |

EP 4 769 884 A1

25

EP 4 769 884 A1

FIG. 9

901

| (1,1) 0 | (1,2) 0 | (1,3) 0 | (1,4) 0 | (1,5) 0 |
| (2,1) 1 | (2,2) 0 | (2,3) 1 | (2,4) 1 | (2,5) 0 |
| (3,1) 0 | (3,2) 0 | (3,3) 1 | (3,4) 4 | (3,5) 1 |
| (4,1) 1 | (4,2) 1 | (4,3) 7 | (4,4) 1 | (4,5) 0 |
| (5,1) 0 | (5,2) 1 | (5,3) 1 | (5,4) 1 | (5,5) 0 |
| (6,1) 0 | (6,2) 1 | (6,3) 1 | (6,4) 1 | (6,5) 1 |

Input

First selection map

Output

902

| (1,1) 0 | (1,2) 0 | (1,3) 0 | (1,4) 0 | (1,5) 0 |
| (2,1) 1 | (2,2) 0 | (2,3) 1 | (2,4) 1 | (2,5) 0 |
| (3,1) 0 | (3,2) 0 | (3,3) 1 | (3,4) 4 | (3,5) 1 |
| (4,1) 1 | (4,2) 1 | (4,3) 7 | (4,4) 1 | (4,5) 0 |
| (5,1) 0 | (5,2) 1 | (5,3) 1 | (5,4) 1 | (5,5) 0 |
| (6,1) 0 | (6,2) 1 | (6,3) 1 | (6,4) 1 | (6,5) 1 |

FIG. 10

```
                              ( S432 )
                                 |
 ┌───────────────────────────────┼──────────────── S442
 |                                ▼                 S1010
 |  ┌──────────────────────────────────────────────┐
 |  |  Set at least one cell group of plurality of cell groups  |
 |  |  as discharge target based on second abnormality index    |
 |  |  of at least one cell group of plurality of cell groups    |
 |  └──────────────────────────────────────────────┘
 |                                |                 S1020
 |                                ▼
 |  ┌──────────────────────────────────────────────┐
 |  |  Determine energy consumption rate of each    |
 |  |  cell group set as discharge target           |
 |  └──────────────────────────────────────────────┘
 |                                |                 S1030
 |                                ▼
 |  ┌──────────────────────────────────────────────┐
 |  |  Output turn-on signal to at least one switch provided  |
 |  |  to each cell group set as discharge target            |
 |  └──────────────────────────────────────────────┘
 |                                |
 └────────────────────────────────┼───────────────
                                  ▼
                              ( End )
```

FIG. 11

1101

| (1,1) 1 50% | (1,2) 0 50% | (1,3) 0 50% | (1,4) 0 50% | (1,5) 0 50% |
|---|---|---|---|---|
| (2,1) 1 50% | (2,2) 2 50% | (2,3) 1 50% | (2,4) 1 50% | (2,5) 0 50% |
| (3,1) 0 50% | (3,2) 0 50% | (3,3) 1 50% | (3,4) 0 50% | (3,5) 0 50% |
| (4,1) 1 50% | (4,2) 4 50% | (4,3) 2 50% | (4,4) 0 50% | (4,5) 2 50% |
| (5,1) 2 50% | (5,2) 1 50% | (5,3) 0 50% | (5,4) 1 50% | (5,5) 0 50% |
| (6,1) 0 50% | (6,2) 0 50% | (6,3) 0 50% | (6,4) 1 50% | (6,5) 0 50% |

Input

Second selection map

Output

1102

| (1,1) 1 50% | (1,2) 0 50% | (1,3) 0 50% | (1,4) 0 50% | (1,5) 0 50% |
|---|---|---|---|---|
| (2,1) 1 50% | (2,2) 2 50% | (2,3) 1 50% | (2,4) 1 50% | (2,5) 0 50% |
| (3,1) 0 50% | (3,2) 0 50% | (3,3) 1 50% | (3,4) 0 50% | (3,5) 0 50% |
| (4,1) 1 50% | (4,2) 4 50% A:30% | (4,3) 2 50% | (4,4) 0 50% | (4,5) 2 50% |
| (5,1) 2 50% | (5,2) 1 50% | (5,3) 0 50% | (5,4) 1 50% | (5,5) 0 50% |
| (6,1) 0 50% | (6,2) 0 50% | (6,3) 0 50% | (6,4) 1 50% | (6,5) 0 50% |

FIG. 12

<u>1201</u>

| (1,1)<br>1<br>50% | (1,2)<br>0<br>50% | (1,3)<br>0<br>50% | (1,4)<br>0<br>50% | (1,5)<br>0<br>50% |
|---|---|---|---|---|
| (2,1)<br>1<br>50% | (2,2)<br>2<br>50% | (2,3)<br>1<br>50% | (2,4)<br>1<br>50% | (2,5)<br>0<br>50% |
| (3,1)<br>0<br>50% | (3,2)<br>0<br>50% | (3,3)<br>1<br>50% | (3,4)<br>0<br>50% | (3,5)<br>0<br>50% |
| (4,1)<br>1<br>50% | (4,2)<br>6<br>50% | (4,3)<br>2<br>50% | (4,4)<br>0<br>50% | (4,5)<br>2<br>50% |
| (5,1)<br>2<br>50% | (5,2)<br>1<br>50% | (5,3)<br>0<br>50% | (5,4)<br>1<br>50% | (5,5)<br>0<br>50% |
| (6,1)<br>0<br>50% | (6,2)<br>0<br>50% | (6,3)<br>0<br>50% | (6,4)<br>1<br>50% | (6,5)<br>0<br>50% |

Input ➡ Second selection map ➡ Output

<u>1202</u>

| (1,1)<br>1<br>50% | (1,2)<br>0<br>50% | (1,3)<br>0<br>50% | (1,4)<br>0<br>50% | (1,5)<br>0<br>50% |
|---|---|---|---|---|
| (2,1)<br>1<br>50% | (2,2)<br>2<br>50% | (2,3)<br>1<br>50% | (2,4)<br>1<br>50% | (2,5)<br>0<br>50% |
| (3,1)<br>0<br>50% | (3,2)<br>0<br>50% | (3,3)<br>1<br>50% | (3,4)<br>0<br>50% | (3,5)<br>0<br>50% |
| (4,1)<br>1<br>50% | (4,2)<br>6<br>50%<br>A,B:40% | (4,3)<br>2<br>50% | (4,4)<br>0<br>50% | (4,5)<br>2<br>50% |
| (5,1)<br>2<br>50% | (5,2)<br>1<br>50% | (5,3)<br>0<br>50% | (5,4)<br>1<br>50% | (5,5)<br>0<br>50% |
| (6,1)<br>0<br>50% | (6,2)<br>0<br>50% | (6,3)<br>0<br>50% | (6,4)<br>1<br>50% | (6,5)<br>0<br>50% |

FIG. 13

**1301**

| (1,5) 0 50% | (2,5) 0 50% | (3,5) 0 50% | (4,5) 2 50% | (5,5) 0 50% | (6,5) 0 50% |
| (1,4) 0 50% | (2,4) 1 50% | (3,4) 0 50% | (4,4) 0 50% | (5,4) 1 50% | (6,4) 1 50% |
| (1,3) 0 50% | (2,3) 1 50% | (3,3) 1 50% | (4,3) 4 53% | (5,3) 0 50% | (6,3) 0 50% |
| (1,2) 0 50% | (2,2) 2 50% | (3,2) 0 50% | (4,2) 4 50% | (5,2) 1 50% | (6,2) 0 50% |
| (1,1) 1 50% | (2,1) 1 50% | (3,1) 0 50% | (4,1) 1 50% | (5,1) 2 50% | (6,1) 0 50% |

Input →

Second selection map

Output →

**1302**

| (1,5) 0 50% | (2,5) 0 50% | (3,5) 0 50% | (4,5) 2 50% | (5,5) 0 50% | (6,5) 0 50% |
| (1,4) 0 50% | (2,4) 1 50% | (3,4) 0 50% | (4,4) 0 50% | (5,4) 1 50% | (6,4) 1 50% |
| (1,3) 0 50% | (2,3) 1 50% | (3,3) 1 50% | (4,3) 4 53% B:40% | (5,3) 0 50% | (6,3) 0 50% |
| (1,2) 0 50% | (2,2) 2 50% | (3,2) 0 50% | (4,2) 4 50% A:20% | (5,2) 1 50% | (6,2) 0 50% |
| (1,1) 1 50% | (2,1) 1 50% | (3,1) 0 50% | (4,1) 1 50% | (5,1) 2 50% | (6,1) 0 50% |

FIG. 14

1401

| (1,1)<br>1<br>50% | (1,2)<br>0<br>50% | (1,3)<br>0<br>50% | (1,4)<br>0<br>50% | (1,5)<br>0<br>50% |
| (2,1)<br>1<br>50% | (2,2)<br>2<br>50% | (2,3)<br>1<br>50% | (2,4)<br>1<br>50% | (2,5)<br>0<br>50% |
| (3,1)<br>0<br>50% | (3,2)<br>0<br>52% | (3,3)<br>1<br>50% | (3,4)<br>0<br>50% | (3,5)<br>0<br>50% |
| (4,1)<br>1<br>51% | (4,2)<br>4<br>50% | (4,3)<br>4<br>53% | (4,4)<br>0<br>50% | (4,5)<br>2<br>50% |
| (5,1)<br>2<br>50% | (5,2)<br>1<br>50% | (5,3)<br>0<br>50% | (5,4)<br>1<br>50% | (5,5)<br>0<br>50% |
| (6,1)<br>0<br>50% | (6,2)<br>0<br>50% | (6,3)<br>0<br>50% | (6,4)<br>1<br>50% | (6,5)<br>0<br>50% |

Input ⇒ Second selection map ⇒ Output

1402

| (1,1)<br>1<br>50% | (1,2)<br>0<br>50% | (1,3)<br>0<br>50% | (1,4)<br>0<br>50% | (1,5)<br>0<br>50% |
| (2,1)<br>1<br>50% | (2,2)<br>2<br>50% | (2,3)<br>1<br>50% | (2,4)<br>1<br>50% | (2,5)<br>0<br>50% |
| (3,1)<br>0<br>50% | (3,2)<br>0<br>52%<br>B:40% | (3,3)<br>1<br>50% | (3,4)<br>0<br>50% | (3,5)<br>0<br>50% |
| (4,1)<br>1<br>51%<br>A:30% | (4,2)<br>4<br>50% | (4,3)<br>2<br>50% | (4,4)<br>0<br>50% | (4,5)<br>2<br>50% |
| (5,1)<br>2<br>50% | (5,2)<br>1<br>50% | (5,3)<br>0<br>50% | (5,4)<br>1<br>50% | (5,5)<br>0<br>50% |
| (6,1)<br>0<br>50% | (6,2)<br>0<br>50% | (6,3)<br>0<br>50% | (6,4)<br>1<br>50% | (6,5)<br>0<br>50% |

## INTERNATIONAL SEARCH REPORT

| International application No. |
|---|
| **PCT/KR2025/009755** |

| A. | CLASSIFICATION OF SUBJECT MATTER |
|---|---|
| | **H02J 7/00**(2006.01)i; **H01M 10/44**(2006.01)i; **H01M 10/48**(2006.01)i |

According to International Patent Classification (IPC) or to both national classification and IPC

| B. | FIELDS SEARCHED |
|---|---|

Minimum documentation searched (classification system followed by classification symbols)

H02J 7/00(2006.01); H01M 10/42(2006.01); H01M 10/44(2006.01); H01M 10/48(2006.01); H01M 10/615(2014.01); H01M 10/633(2014.01); H02H 7/18(2006.01); H02J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 배터리 셀(battery cell), 방전(discharge), 고온(high temperature), 저온(low temperature), 선택 맵(selection map)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2011-115040 A (SAMSUNG SDI CO., LTD.) 09 June 2011 (2011-06-09)<br>    paragraphs [0002]-[0060] | 1-3,6-15 |
| A | | 4,5 |
| Y | JP 6261232 B2 (SAMSUNG SDI CO., LTD.) 17 January 2018 (2018-01-17)<br>    paragraph [0053] | 1-3,6-15 |
| Y | JP 2017-212803 A (TOYOTA MOTOR CORP.) 30 November 2017 (2017-11-30)<br>    paragraph [0043] | 2,3,13,14 |
| Y | KR 10-2020-0131621 A (LG CHEM, LTD.) 24 November 2020 (2020-11-24)<br>    paragraphs [0095]-[0096] | 9,10 |
| A | US 2009-0220825 A1 (NAKASHIMA, Ryoichi et al.) 03 September 2009 (2009-09-03)<br>    paragraphs [0037]-[0069] | 1-15 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2025** | **12 October 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | International application No. |
|---|---|
| | **PCT/KR2025/009755** |

| Patent document cited in search report | | | Publication date (day/month/year) | Patent family member(s) | | | Publication date (day/month/year) |
|---|---|---|---|---|---|---|---|
| JP | 2011-115040 | A | 09 June 2011 | CN | 102082310 | A | 01 June 2011 |
| | | | | CN | 102082310 | B | 25 December 2013 |
| | | | | EP | 2328224 | A1 | 01 June 2011 |
| | | | | EP | 2328224 | B1 | 29 August 2012 |
| | | | | KR | 10-1093928 | B1 | 13 December 2011 |
| | | | | KR | 10-2011-0058378 | A | 01 June 2011 |
| | | | | US | 2011-0121787 | A1 | 26 May 2011 |
| | | | | US | 8896271 | B2 | 25 November 2014 |
| JP | 6261232 | B2 | 17 January 2018 | CN | 103580108 | A | 12 February 2014 |
| | | | | CN | 103580108 | B | 12 April 2017 |
| | | | | EP | 2696465 | A1 | 12 February 2014 |
| | | | | EP | 2696465 | B1 | 21 December 2016 |
| | | | | JP | 2014-036575 | A | 24 February 2014 |
| | | | | KR | 10-1835585 | B1 | 07 March 2018 |
| | | | | KR | 10-2014-0021486 | A | 20 February 2014 |
| | | | | US | 2014-0042977 | A1 | 13 February 2014 |
| | | | | US | 9257860 | B2 | 09 February 2016 |
| JP | 2017-212803 | A | 30 November 2017 | JP | 6668944 | B2 | 18 March 2020 |
| KR | 10-2020-0131621 | A | 24 November 2020 | CN | 112789781 | A | 11 May 2021 |
| | | | | CN | 112789781 | B | 30 July 2024 |
| | | | | EP | 3846309 | A1 | 07 July 2021 |
| | | | | JP | 2022-508101 | A | 19 January 2022 |
| | | | | JP | 7151051 | B2 | 12 October 2022 |
| | | | | US | 11764590 | B2 | 19 September 2023 |
| | | | | US | 2021-0399553 | A1 | 23 December 2021 |
| | | | | WO | 2020-230991 | A1 | 19 November 2020 |
| US | 2009-0220825 | A1 | 03 September 2009 | CN | 101322295 | A | 10 December 2008 |
| | | | | EP | 1868274 | A1 | 19 December 2007 |
| | | | | JP | 2007-236033 | A | 13 September 2007 |
| | | | | KR | 10-2008-0103397 | A | 27 November 2008 |
| | | | | TW | 200810314 | A | 16 February 2008 |
| | | | | WO | 2007-097181 | A1 | 30 August 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240097678

- KR 1020250089967